# EUROPEAN PATENT SPECIFICATION

(11) **EP 3 584 028 B1**
(45) Date of publication and mention of the grant of the patent: **27.04.2022**
(21) Application number: 18851531.6
(22) Date of filing: 16.08.2018
(51) Int. Cl.: B23K 11/20, B23K 11/02, B23K 11/36, B23K 20/00

(54) **METHOD FOR MANUFACTURING WELDED ARTICLE FROM DIFFERENT METALS, AND WELDING DEVICE**
VERFAHREN ZUR HERSTELLUNG EINES GESCHWEISSTEN ARTIKELS AUS VERSCHIEDENEN METALLEN UND SCHWEISSVORRICHTUNG
PROCÉDÉ DE FABRICATION D'UN ARTICLE SOUDÉ À PARTIR DE DIFFÉRENTS MÉTAUX ET DISPOSITIF DE SOUDAGE

(30) Priority: 29.08.2017 JP 2017164321
(43) Date of publication of application: 25.12.2019
(73) Proprietor: Origin Company, Limited, Saitama-shi Saitama 338-0823 (JP)
(72) Inventor: KADOYA, Yasuo, Saitama-shi Saitama 338-0823 (JP)
(74) Representative: Wallin, Nicholas James
(86) International application number: PCT/JP2018/030393
(87) International publication number: WO 2019/044516

(56) References cited:
- JP-A- S5 272 346
- JP-A- S5 741 891
- JP-A- S5 741 891
- JP-A- S54 159 315
- JP-A- S61 147 980
- JP-A- S63 188 484
- JP-B2- S 599 014

## Description

### TECHNICAL FIELD

The present invention relates to a method for manufacturing a dissimilar metals-joined article specifically to a method for manufacturing a joined article by joining metal members that are such that, for example, one reaches a melting point while the other is at a softening temperature during electric current joining.

### BACKGROUND ART

There is much demand for solid phase joining of aluminum and iron, because the method allows for weight reduction. Aluminum and iron can be solid phase joined by, for example, Ring mash (registered trademark) joining or ring projection joining using a resistance welding apparatus.

### RELATED ART DOCUMENT

### PATENT DOCUMENTS

Patent Document 1: JP : S 5909014 B (forming the base for the preamble of claim 1) refers to joining a first member D made of carburized steel and having a ring-like shape and a second member E made of low-carbon steel and having a circular cylindrical shape.

JPS5741891A relates to a method for pressure butt welding, wherein a stainless steel material is clamped by electrodes for conduction of electricity and a copper material by electrodes for conduction of electricity. The butt end part of the copper material is preheated with a high frequency coil, and while both base materials SuS, and Cu are electroheated, pressure is applied to the butt end parts, whereby the end parts of both base metals are pressure-welded.

### SUMMARY OF THE INVENTION

### PROBLEM TO BE SOLVED BY THE INVENTION

In the state of the art, in cases where aluminum and iron or other such metals having significantly dissimilar melting points are employed, the metal having the lower melting point ("low melting point metal") melts in the vicinity of a joint portion during solid phase joining, and it is therefore difficult to extend a joint length. During solid phase joining, the temperature of the low melting point metal exceeds the melting point at a temperature at which the metal having the higher melting point ("high melting point metal") softens, so the low melting point metal melts in the vicinity of the joint portion, and thus the joint length cannot be extended, and also a large amount of spatter may occur. Under certain conditions, although the low melting point metal softens and melts, the high melting point metal does not soften and cannot undergo plastic deformation, and it is therefore not possible to perform solid phase joining.

In view of the problems stated above, it is an objective of the present invention to provide: a method for manufacturing a joined article in which joint length is adequate even when metals are joined together that are such that, for example, one reaches a melting point before the other during electric current joining; and a joining apparatus that joins such metal members together.

### MEANS FOR SOLVING THE PROBLEM

To achieve the above object, the present invention provides a method for manufacturing a joined article according to claim 1.

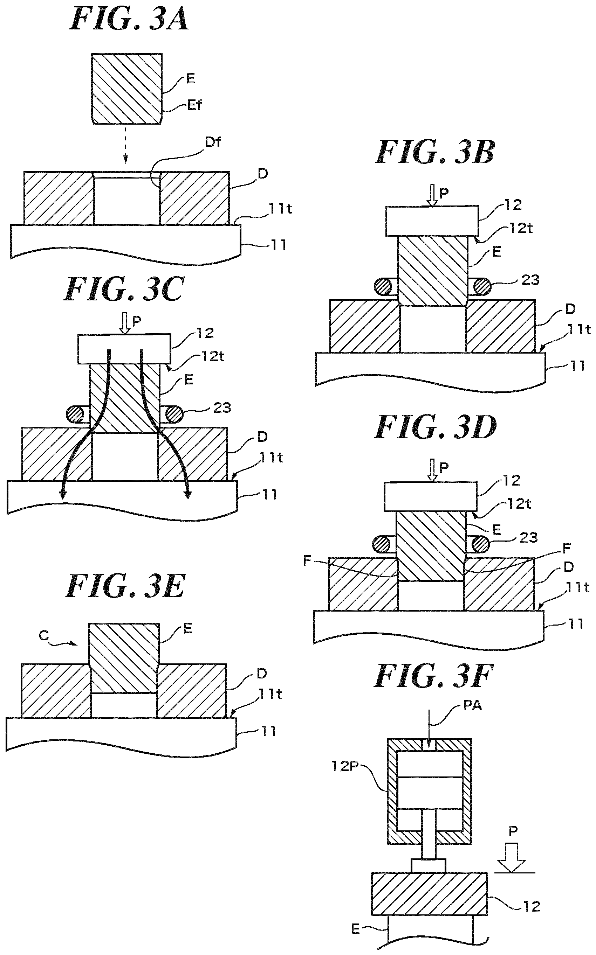

To achieve the above object, arrangements described herein provide a method for manufacturing a joined article that includes, as shown in FIGs. 3, 5D and 6, for example, providing the first metal member E (ST1); providing the second metal member D, the second metal member D reaching a melting point before the first metal member E when the second metal member D is brought into contact with the first metal member E and an electric current is applied between the two metal members D and E (ST2); preheating the first metal member E using a high-frequency induced electric current (ST3); applying pressure on the first metal member E and the second metal member D (ST4); applying an electric current between the first metal member E and the second metal member D at a timing at which a temperature of the first metal member E has reached a prescribed temperature TS4 due to the preheating (ST5); and joining the first and second metal members D and E through the application of pressure and the application of an electric current (ST4, ST5).

In this way, since there are provided a step of preheating a first metal member and a step of applying an electric current between the first metal member and a second metal member at a timing at which a temperature of the first metal member has reached a prescribed temperature due to the preheating, even when employing metal members in which a second metal member reaches a melting point before a first metal member when the second metal member is brought into contact with the first metal member and an electric current is applied between the two metal members, the temperatures of the two metal members at the time of being joined together can be made suitable for solid phase joining. Accordingly, it is possible to provide a method for manufacturing a joined article in which joint length is adequate. A temperature suitable for solid phase joining means a temperature at which no excessive spatter occurs due to melting of one of the metal members, especially the second metal member. A temperature suitable for solid phase joining can also be expressed as a temperature at which electric resistance welding is possible, which means that the temperatures of the two metal members are both higher than the softening temperatures of the members but do not fall beyond the melting points thereof. The "prescribed temperature" as referred to herein means a temperature such that, in a case where such a temperature is employed for the first metal member, the first metal member and the second metal member will be at the softening temperatures thereof at which appropriate electric resistance welding can be carried out when both metal members are brought into contact and an electric current is applied thereon.

As for the method for manufacturing a joined article according to the present invention, the method for manufacturing a joined article further includes the first metal member E is iron or an iron steel material and therefore a magnetic substance.

Since the first metal member to be preheated is a magnetic substance, the efficiency of heating based on a high-frequency induced electric current is high. The preheating based on a high-frequency induced electric current may be carried out while having the two metal members removed from each other. In a case where the two members are removed greatly such that there is no substantial impact from the heating based on a high-frequency induced electric current, the second metal member may also be a magnetic substance.

As for the method for manufacturing a joined article according to the present invention, the method for manufacturing a joined article further includes the second metal member, i.e. the member being an aluminum or aluminum alloy member, has a lower melting point than the first metal member.

Since the second metal member has a lower melting point than the first metal member, the second metal member more readily reaches the melting point before the first metal member when the second metal member is brought into contact with the first metal member and an electric current is applied between the two metal members.

As for the method for manufacturing a joined article according to other arrangements described herein for background information, for example, the method for manufacturing a joined article may further include that the first metal member E has a higher heat conductivity than the second metal member D.

In this way, since the first metal member has a higher heat conductivity, heat is readily dissipated from the first metal member and temperature rises less readily therein than in the second metal member when the first metal member is brought into contact with the second metal member and an electric current is applied on the two metal members. Accordingly, the second metal member more readily reaches the melting point before the first metal member.

As for the method for manufacturing a joined article according to other arrangements described herein for background information, for example, the method for manufacturing a joined article further includes the first metal member has a larger heat capacity than the second metal member.

In this way, since the first metal member has a larger heat capacity than the second metal member, the temperature rises less readily in the first metal member. Heat capacity is arrived at by multiplying specific heat by mass.

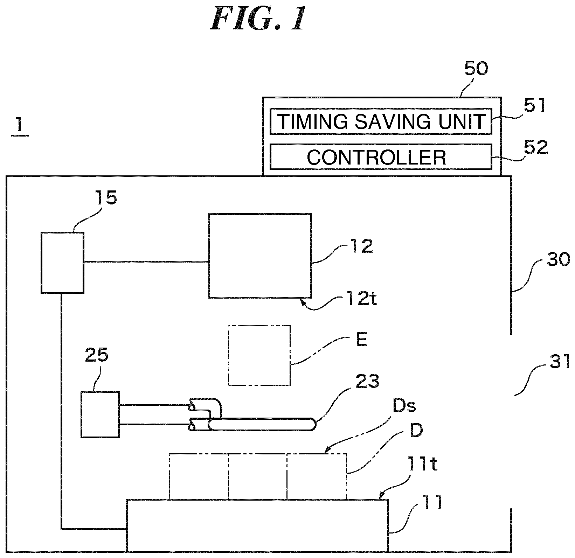

To achieve the above object, a joining apparatus for metal members described herein includes, as shown in FIGs. 1, 3 and 5B, for example, the joining apparatus for metal members, joining a first metal member E and a second metal member D reaching a melting point before the first metal member E when the second metal member D is brought into contact with the first metal member E and an electric current is applied between the two metal members E and D, the apparatus comprising: an induction coil 23 configured to preheat the first metal member E using a high-frequency induced electric current; first and second electrodes 11 and 12 configured to apply an electric current between the first metal member E and the second metal member D at a timing at which a temperature of the first metal member E has reached a prescribed temperature TS4 due to the preheating; a pressure application device 12P configured to apply pressure on the first metal member E and the second metal member D; and a control unit 50 configured to perform control according to which the application of an electric current based on the high-frequency induced electric current and the application of pressure by the pressure application device 12P are carried out at timings set in accordance with material characteristics of the first metal member E and the second metal member D.

Typically, the material characteristics are a melting point, heat conductivity, and heat capacity.

In this way, an apparatus for joining metal members is achieved that can manufacture a joined article in which joint length is adequate.

### EFFECT OF THE INVENTION

According to the present invention, it is possible to manufacture a joined article in which joint length is adequate even when metals are joined together that are such that, for example, one reaches a melting point before the other during electric current joining.

### BRIEF DESCRIPTION OF DRAWINGS

FIG. 1 is a schematic configuration diagram of a joining apparatus for manufacturing a joined article according to an embodiment of the present invention.
FIGs. 2A to 2C is a diagram, illustrating joining of a member D and a member E according to the embodiment of the present invention, where FIG. 2A is a perspective view of the member D and the member E, FIG. 2B is a cross-sectional view of the member D and the member E, and FIG. 2C is a cross-sectional view of a joined article C.
FIGs. 3A to 3F is a schematic diagram, illustrating a procedure of a method for manufacturing a joined article according to the embodiment of the present invention.
FIG. 4 is a schematic diagram, illustrating a joining apparatus according to another example not being part of the present invention.
FIGs. 5A and 5B is a schematic diagram, illustrating a conventional example of a method for manufacturing a joined article (method for joining metal members), together with temperatures of the members.
FIGs. 5C and 5D is a schematic diagram, illustrating the method for manufacturing the joined article according to the embodiment of the present invention. FIG. 5C is a diagram, illustrating a state prior to application of pressure and an electric current and a state after application of pressure and an electric current, and FIG.5D is a graph, illustrating temperatures of both metal members over the passage of time.
FIG. 5E is a schematic diagram, illustrating a method for manufacturing the joined article according to an example not being part of the present invention.
FIG. 6 is a flowchart, illustrating the method for manufacturing a joined article, which defines the embodiment of the present invention.

### DETAILED DESCRIPTION OF THE INVENTION

The present invention will become more fully understood from the detailed description given hereinbelow. Further range of application of the present invention will become clearer from the detailed description given hereinbelow. However, the detailed description and the specific embodiment are illustrated of desired embodiments of the present invention and are described only for the purpose of explanation.

Description will hereinafter be made of an embodiment of the present invention with reference to the drawings. The same or corresponding members are denoted with the same reference numerals in all the drawings, and their descriptions are not repeated.

"Joining" as referred to in the present invention is typically solid phase joining. Solid phase joining is a technical term used in the field of welding and is a generic term for welding methods in which joint surfaces are joined at solid phase surfaces. In this method, welding on a joint portion (welded joint) is performed at a temperature lower than or equal to the melting point of a base material. Thus, notwithstanding the term "welding", members to be joined are joined without being melted. Even if a member is partially melted, joining strength is obtained at a portion that is joined at or below the melting point. For the sake of convenience, when "solid phase joining" is referred to in this description, the concept of the term encompasses cases where such partial melting is carried out, in particular, cases where an edge portion in Ring mash joining explained below is melted partially or a leading end portion of a projection in projection joining explained below is melted partially. Such partial melting typically occurs immediately after energization is commenced.

Ring mash (registered trademark) joining is one known method for electrically joining two (metal) members to be joined with large joining strength. In this method, an outer diameter of one of the members to be joined is made somewhat larger than an inner diameter of a hole of the other member to be joined, thereby creating an overlap margin. Positioning is carried out such that a portion to be joined of the one member to be joined slightly overlaps with a portion to be joined in the hole of the other member to be joined, and in this state, an electric current is applied on the two members to be joined while pressure is being applied on the two members. In this manner, the solid phase joining is carried out by causing plastic flow in the portions to be joined and pressing one member to be joined into the hole of the other member to be joined. Another similar joining method is projection joining. Ring mash joining and projection joining are both joining methods based on resistance welding where a welding electric current is applied concurrently with application of pressure.

First, with reference to FIG. 1, described will be an apparatus 1 for manufacturing a joined article. FIG. 1 is a schematic configuration diagram of the apparatus 1 for manufacturing a joined article. The apparatus 1 for manufacturing a joined article includes: an electrode 11 serving as a first electrode to be brought into contact with a member D serving as a second metal member; an electrode 12 serving as a second electrode to be brought into contact with a member E serving as a first metal member; a welding power source 15; a housing 30 accommodating these; and a control unit 50. There are also provided a high-frequency power source 25 and an induction coil 23. Now, before giving detailed description on the apparatus 1 for manufacturing a joined article, an example of a configuration of a joined article that is manufactured by the apparatus 1 for manufacturing a joined article will be described.

The apparatus 1 for manufacturing a joined article is configured to be capable of carrying out resistance welding on the member D and the member E by means of the electrode 11 and the electrode 12. The electrode 11 has a first contact face 11t that is formed on an upper face of the electrode 11 and that the member D is brought into contact with. The first contact face 11t is typically formed to be flat. The electrode 11 is typically placed on a bottom face of the housing 30 such that the first contact face 11t is horizontal. The electrode 12 is placed above the electrode 11 and has a second contact face 12t that is formed on a lower face of the electrode 12 and that the member E is brought into contact with. The second contact face 12t is typically formed to be flat. The electrode 12 is supported by an electrode support (not illustrated) such that the second contact face 12t is horizontal. The electrode 12 is configured to be such that when supported by the electrode support (not illustrated), the electrode 12 is movable vertically and can be pressed against the electrode 11. The electrode 11 and the electrode 12 are electrically connected to the welding power source 15.

The welding power source 15, which supplies an electric current to the electrode 11 and the electrode 12, includes a charging circuit, a capacitor charged by the charging circuit, a transformer, and the like, and is typically a power source that is capable of supplying a pulsed welding electric current.

Here, a pulsed electric current is typically a single pulsed electric current. This pulsed electric current has an electric current peak value of, for example, several tens to several hundreds of thousands of amperes and a pulse width thereof is from 10 milliseconds to 100 milliseconds. With such a pulsed electric current, joining between members to be joined can be carried out reliably.

A preheat power source 25 is a power source that supplies a high-frequency electric current to the preheat coil 23. The high-frequency power source may be a power source constituted by, for example, a circuit that converts mains electricity into DC, a circuit that generates high-frequency energy with a thyristor, MOSFET, IGBT, etc., and a matching unit serving to efficiently transmit the high-frequency energy to the heating coil.

The induction (preheat) coil 23 that heats the first metal member E is a single-turn or double-turn coil constituted by a thick copper rod for passing a large electric current. The coil 23 is disposed so as to surround the portion to be preheated in the first metal member E.

The housing 30 accommodates the electrode 11, the electrode 12, the welding power source 15, the preheat power source 25, and other relevant equipment forming the apparatus 1 for manufacturing a joined article. The apparatus 1 for manufacturing a joined member constituted in this way can be easily transported as one unit. The housing 30 has an opening 31 through which the member D, the member E, and the joined article C can be put into and taken out of the housing 30.

The control unit 50 is a device for controlling the operation of the apparatus 1 for manufacturing a joined article. The control unit 50 is connected to each of the electrode support (not illustrated) and a coil support (not illustrated) independently via a separate signal cable and is configured to be capable of independently moving the electrode 12 vertically. The control unit 50 is also connected to the welding power source 15 via a signal cable and is configured to be capable of controlling the supply and shutoff of an electric current to the electrode 11 and the electrode 12 as well as the magnitude of the electric current supplied thereto.

The control unit 50 is also connected to the preheat power source 25 and is configured to control the magnitude of the electric current supplied to the induction (preheat) coil 23 and the timing at which to, for example, commence or terminate supply of the electric current to the coil 23. The control unit 50 typically is attached to the housing 30 either inside or outside the housing 30 but may also be disposed at a location remote from the housing 30 and configured to operate the apparatus 1 for manufacturing a joined article remotely.

The control unit 50 includes a timing saving unit 51 and a controller 52. The timing saving unit 51 saves timings for preheating (from preheating to a time t1 at which a joining step involving the application of pressure and an electric current commences, or a temperature TS4 of the first metal member at the time of commencement of the joining step). The controller 52 controls the welding power source 15, the preheat (high-frequency) power source 25, and a pressure application device 12P while controlling the commencement of preheating as well as the completion of preheating and the commencement of the joining step in accordance with the timings saved in the timing saving unit.

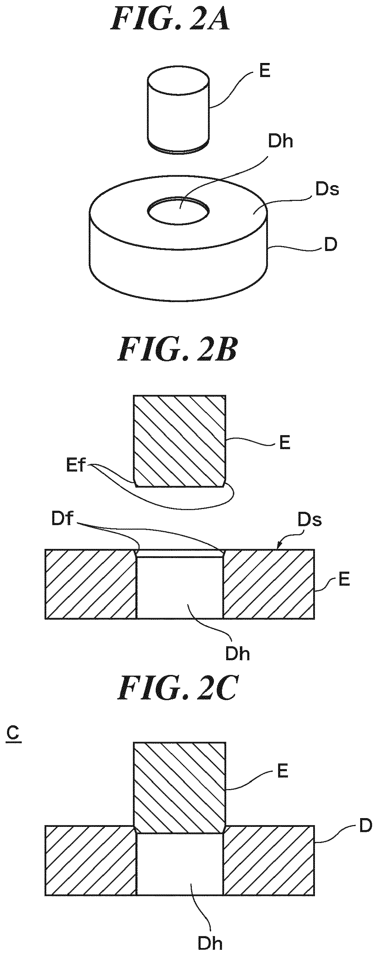

FIG. 2A is a perspective view of the member D serving as the second metal member and the member E serving as the first metal member. FIG. 2B is a cross-sectional view of the member D and the member E. FIG. 2C is a cross-sectional view of the joined article. The joined article C is a component obtained by welding the member D and the member E together. In this embodiment, description is given on the assumption that the member D is formed to have a ring-like shape and the member E is formed to have a circular cylindrical shape. The member D has a thick disk-like shape, through the center of which a circular cylindrical hollow portion Dh is formed. In the member D, an outer circumference of the disk and a circumference of the hollow portion Dh are concentric. In the member D, a corner between an end face Ds and the hollow portion Dh is chamfered so as to form a first joint surface Df. The first joint surface Df corresponds to a portion to be joined in the member D. This example describes a case where the joint length is short, but the same principle is applicable to a case with a great joint length.

The member E is formed such that an outer diameter thereof is somewhat larger than the diameter of the hollow portion Dh of the member D. In the member E, a corner between an end face and a lateral face of the member E is chamfered so as to form a second joint surface Ef. The first joint surface Ef corresponds to a portion to be joined in the member E. The first joint surface Ef is formed such that the first joint surface Ef contacts the second joint surface Df of the member D by surface contact.

Preferably, in the joining step, the joining electric current is passed through the portions to be joined in the member D and the member E while pressure is being applied on the portions. Application of pressure facilitates the occurrence of plastic flow. The joining step consists of resistance welding in which Joule's heat, which is generated by contact resistance between the member D and the member E made of metal materials, is used to join the two members. The resistance welding here, despite being called "welding", is typically solid phase joining that does not involve melting, as has been described earlier.

Lowering of the member E in bringing the same into contact with the member D in a contact-placing step, a preheating step, and the joining step (a pressure application step and a step of applying an electric current to both metal members) are controlled by the control unit 50.

With reference to FIGs. 3A to 3F, the flow of an electric current during joining and the joint portions will be described.

FIGs. 3A to 3F is a diagram illustrating discharge in the case of Ring mash (registered trademark) joining. While pressure P is being applied on the electrode 12 by a pressure application device 12P, an electric current A is passed from the electrode 12 in contact with the member E toward the electrode 11 in contact with the member D. The electric current flows through contact portions F of the two members and heats the contact portions to join the same, resulting in the formation of the joint portions. In this embodiment, as described above, the welding power source 15 includes a capacitor and instantly discharges electric energy, so a relatively large electric current is obtained within a short time (e.g. several tens of milliseconds) and the second joint surface Df and the first joint surface Ef are solid-phase joined.

The pressure application device 12P is typically a piston-cylinder mechanism as illustrated in FIG. 3F. Compressed air PA is supplied to the cylinder. However, it is also possible to use other types of fluid, such as oil or water, rather than air.

The induction coil 23 is disposed so as to surround the first metal member E and serves to preheat the first metal member E before an electric current is applied between the two members.

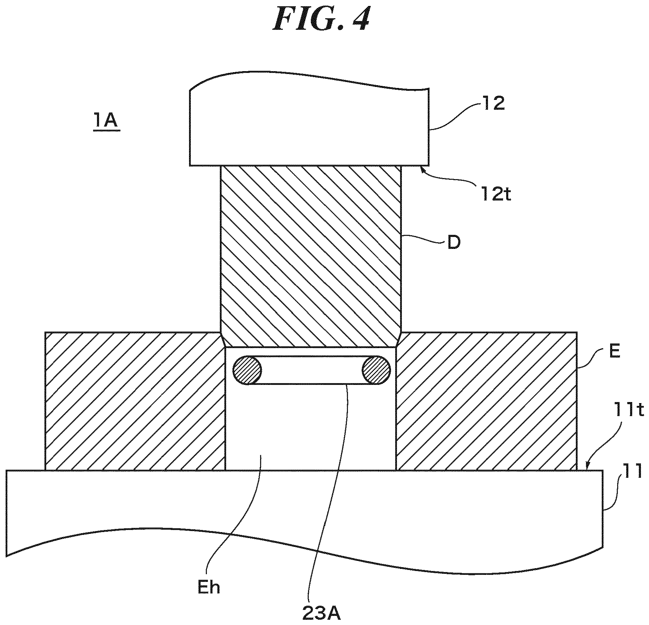

With reference to FIG. 4, another embodiment will be described. In this case, a hollow portion Eh is formed in the first metal member E. Accordingly, an induction coil 23A is provided in the hollow portion Eh. In this example, it is preferable to employ a configuration in which, in the drawing, pressure is applied on the first metal member E upward by the electrode 11 so that pressure is applied on the first metal member E and the second metal member D. However, it is also possible to employ a configuration in which, in the drawing, the electrode 12 is moved downward together with the second metal member D so that the second metal member D is pressed into the first metal member E, whereby pressure is applied on the two metal members.

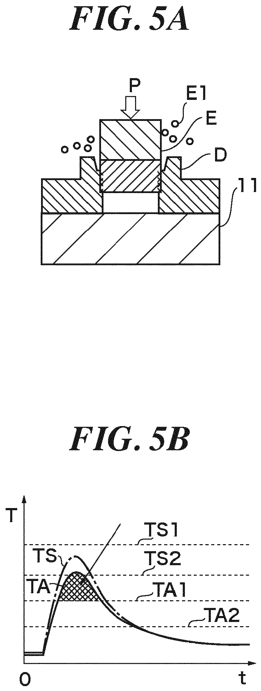

With reference to FIGs. 5A to 5C, a method for manufacturing a dissimilar metals-joined article will be described.

First, with reference to FIGs. 5A and 5B, a conventional method involving no preheating will be described. In this example, the first metal member E is iron or an iron steel material (simply referred to as "iron" below) and the second metal member D is aluminum or an aluminum alloy (simply referred to as "aluminum" below). The graph illustrates TS as the temperature of the iron, TS1 as the melting point of the iron, TS2 as the softening temperature of the iron, TA as the temperature of the aluminum, TA1 as the melting point of the aluminum, and TA2 as the softening temperature of the aluminum. TS1 is the highest of all and is about 1300°C to 1500°C, followed by TS2 that is lower than TS1 and is about 800°C, then TA1 is lower than TS2 and is about 600°C, and TA2 is even lower than TA1.

When a joining electric current is passed in order to commence the Ring mash joining, the temperatures of the iron and the aluminum start to rise at the same time. When the temperature TS of the iron reaches a temperature suitable for the Ring mash joining, which is a temperature falling partway between the melting point TS1 and the softening temperature TS2, the temperature TA of the aluminum exceeds the melting point TA1 of the aluminum. Under certain conditions, the temperature rises up to the softening temperature TS2 of the iron.

In other words, in a case where pressure and an electric current is applied in order to join the two metals, when one of the metals (iron) is at a softening temperature suitable for joining, the other (aluminum) has already reached the melting point. If the employed metals are such that when one metal member is at a softening temperature suitable for joining, the other is also at a softening temperature thereof, then there would be no problem; however, iron and aluminum are not in such a relationship. When iron reaches the softening temperature, aluminum will always be beyond the melting point.

As described above, since aluminum will be at or above the melting point, solid phase joining that enables joining below the melting point cannot be achieved. In this case, aluminum melts in the vicinity of the joint portion during joining and so the joint length cannot be extended and also a large amount of spatter E1 occurs. Under certain conditions, although aluminum softens and melts, iron does not soften at all and cannot undergo plastic deformation, and it is therefore not possible to perform joining.

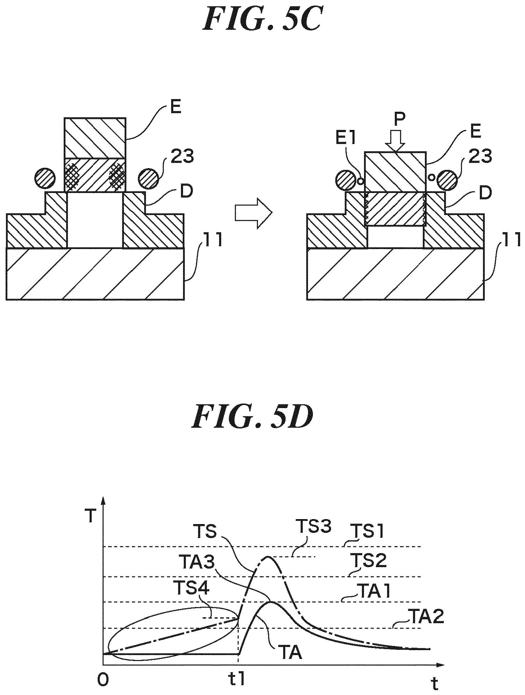

With reference to FIG. 5C, described will be a method for manufacturing a joined article or a method for joining metal members, which define the embodiment of the present invention. The left figure in FIG. 5C illustrates a state during preheating and the right figure in FIG. 5C illustrates a state of a joining step. The graph illustrates changes in the temperatures of the two metal members over time.

The period extending from time 0 to time t1 coinciding with the commencement of the joining step is a preheat period. The preheating carried out until time t1 results in a rise of the temperature of the iron member up to TS4. During preheating, it is preferred that the two members be held removed slightly from each other so that no heat transfer occurs therebetween due to heat conduction. Alternatively, but not being part of the invention, the corners of the two members may be in contact with each other such that a small amount of heat conduction occurs therebetween. In this case, it is possible to make a quick transition to the joining step following the preheating.

For the purpose of raising the temperature of the iron alone preferentially, the iron is preheated through high-frequency induction heating immediately before energization in the Ring mash joining or the ring projection joining. High-frequency induction heating is a heating method in which an induction (preheat) coil is used to induce eddy current in a conductive body in contactless fashion, and the resulting Joule's heat is used for heating. The intensity of eddy current is influenced by the magnitude of the magnetic permeability of a substance. The degree of temperature rise in the aluminum as a non-magnetic substance is lower, and the iron as a magnetic substance is heated selectively.

At the time point t1 at which preheating has been completed, a welding electric current is passed concurrently with application of pressure, whereby the joining step is commenced. Typically, pressure is applied prior to energization. In the joining step, when the temperature of the iron rises to the temperature TS3 that falls halfway between the melting point TS1 and the softening temperature TS2, the temperature of the aluminum is at the temperature TA3 that is a midpoint between the melting point TA1 and the softening temperature TA2. As illustrated in the drawing, TA3 may stay at the temperature TA1 only for a short period of time. The reason therefor is that the two metal members have already settled at positions at which to be joined together. Preferably, TA3 is a temperature that is higher than the softening temperature TA of the aluminum but is lower than the melting point TA1 thereof.

To cite an example, when the temperature of the iron has risen to about 500°C as TS4, the resistance welding electric current may be passed so that Joule's heat resulting from contact resistance between the iron and the aluminum produces heat and thus the Ring mash joining or the ring projection joining is performed. Assuming that the temperature rises due to Joule's heat by about +500°C for both aluminum and iron, the temperature TS3 of the iron near the contact portion is about 1000°C whereas the temperature TA3 of the aluminum near the contact portion is about 500°C, thus both temperatures are higher than or equal to the softening temperatures and lower than or equal to the melting points so that solid phase joining can be carried out.

The temperature TS4 of the iron at which to commence of the joining step is determined in advance through experiments or calculations such that the highest temperatures of the two metal members in the joining step both fall halfway between the melting point temperatures and the softening temperatures thereof. The determined temperature is saved in the timing saving unit of the control unit. The timing may also be calculated on the basis of time t1 at which the temperature of the iron reaches an appropriate joining step commencement temperature TS4 due to preheating. In this case, t1 is saved in the timing saving unit.

According to this embodiment, the amount of spatter E1 generated is extremely small if any, and appropriate solid phase joining, or joining with adequate joint length, is possible.

Preferably, the first metal member E is a magnetic substance. If a magnetic substance is employed, the efficiency of heating based on a high-frequency induced electric current is high

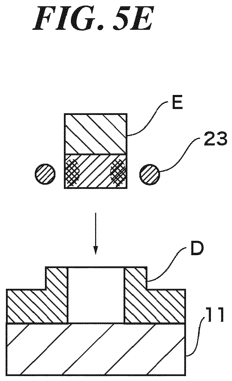

FIG. 5E illustrates an example not being part of the invention where not only the first metal member E but also the second metal member D is a magnetic substance. The second metal member D is adequately removed from the coil 23 through which a high-frequency induced electric current flows, and in this state, the first metal member is preheated. Due to being adequately removed, the second metal member is not subject to preheating. The first metal member E may be an alloyed steel and the second metal member D may be cast iron, for example. This case is also applicable to a case where neither the first metal member nor the second metal member is a magnetic substance. This is because a non-magnetic substance can be heated with a high-frequency electric current despite the heating efficiency thereof being low.

With reference to FIGs. 5C and 5D, a case according to the invention has been described where the first metal member is iron and the second metal member is aluminum, but outside the invention the combination of members is not limited to this; it suffices if the second metal member D is such that the second metal member D reaches the melting point before the first metal member E when the second metal member D is brought into contact with the first metal member E and an electric current is applied between the two metal members.

For example, the first metal member may have a higher melting point than the second metal member. When the two metal members are brought into contact and an electric current is applied thereon, the second metal member having the lower melting point more readily reaches the melting point earlier. In such a case as well, preheating the first metal member makes it possible to avoid a situation, such as where the temperature of the second metal member has already exceeded the melting point when the first metal member reaches the softening temperature.

In other arrangements described herein for background information only, the first metal member may have a higher heat conductivity than the second metal member. As a result of the first metal member having a higher heat conductivity, heat is readily dissipated from the first metal member and temperature rises less readily therein than in the second metal member. Preheating the first metal member makes it possible to avoid a situation, such as where the temperature of the second metal member has already exceeded the melting point when the first metal member reaches the softening temperature.

Further, the first metal member E may have a larger heat capacity than the second metal member D. The temperature of a metal member having a larger heat capacity rises less readily. In such a case as well, preheating the first metal member makes it possible to avoid a situation, such as where the temperature of the second metal member has already exceeded the melting point when the first metal member reaches the softening temperature.

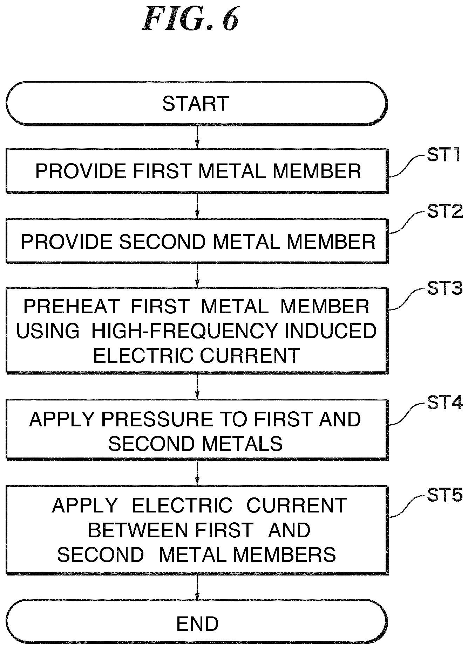

With reference to the flowchart in FIG. 6, a method for manufacturing a dissimilar metals-joined article, which defines the embodiment of the present invention, will be described. First, the first metal member E, made from iron, is provided (ST1). Next, the second metal member D, made from aluminum, is provided, the second metal member D reaching a melting point before the first metal member E when the second metal member D is brought into contact with the first metal member E and an electric current is applied between the two metal members simultaneously (ST2). In other words, the second metal member D is a metal member that is such that when the first metal member E reaches a temperature suitable for the solid phase joining, the second metal member D has already reached the melting point. Next, the iron E is preheated using a high-frequency induced electric current (ST3). Iron is a magnetic substance and can therefore be heated efficiently using a high-frequency induced electric current. At a timing at which the iron E has reached a prescribed temperature TS4 due to the preheating, an electric current is applied between the iron E and the second metal member D (ST5). The prescribed temperature TS4 is determined in advance through experiments or calculations. Measurement of temperature enables the ascertainment of the fact that the prescribed temperature has been reached. Measurement of temperature may be carried out using, for example, an infrared thermometer. Alternatively, time t1 required for the temperature to reach the prescribed temperature TS4 may be determined through experiments or calculations and be used to control energization. Pressure is applied on the iron E and the aluminum D to join the same (ST4). Application of pressure and application of an electric current may be commenced simultaneously, but typically, first, the first and second metal members are brought into contact and the positional relationship between the members is fixed, followed by application of pressure thereon. At this time, the step of solid phase joining is not commenced yet. Then, by commencing application of an electric current, the two metal members are solid phase joined. In this way, it possible to carry out the joining after having fixed the positional relationship of the first and second metal members to center the same first.

The step of preheating the first metal member may also be carried out using other heating means, such as an annular burner configured to surround the member, for example. The preheating based on a high-frequency induced electric current, however, is advantageous in terms of device size reduction, shortening the preheating duration, ease of control, ease of local heating, etc.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein.

### DESCRIPTION OF REFERENCE NUMERALS AND SYMBOLS

- 1: joining apparatus (apparatus for manufacturing a joined article)
- 11: first electrode
- 12: second electrode
- 12P: pressure application device
- 15: welding power source
- 23: induction (preheat) coil
- 25: high-frequency (preheat) power source
- 30: housing
- 31: opening
- 50: control unit
- 51: timing saving unit
- 52: controller
- E: first metal member
- D: second metal member
- P: pressure
- ST1: providing first metal member
- ST2: providing second metal member
- ST3: preheating first metal member
- ST4: applying pressure to first and second metals
- ST5: applying electric current between first and second metal members
- T: temperature
- TS: temperature of a first metal member
- TS1: melting point of a first metal member

- TS2: softening temperature of a first metal member
- TA: temperature of a second metal member
- TA1: melting point of a second metal member
- TA2: softening temperature of a second metal member
- t: time
- t2: time of start of joining process

## Claims

1. A method for manufacturing a joined article (C) obtained by j oining joint surfaces of first and second metal members (E, D), the joint surface of one of the metal members being a leading end portion-outer circumferential surface of the metal member, the other of the metal members having a hole, the hole being defined by an inner circumferential surface of the other metal member, the inner circumferential surface being the joint surface of the other metal member, the method comprising:
providing (ST1) the first metal member (E);
providing (ST2) the second metal member (D); the method being **characterised in** preheating (ST3) the joint surface of the first metal member (E) using a high-frequency induced electric current;
applying pressure (ST4) on the first metal member (E) and the second metal member (D) in a manner in which the leading end portion is pressed into the hole;
applying a first electric current (ST5) between the first metal member (E) and the second metal member (D) at a timing at which a temperature of the first metal member (E) has reached a prescribed temperature due to the preheating; and
solid phase joining the first and second metal members (E, D) through the application of pressure and the application of the first electric current,
the first metal member (E) is iron or an iron steel material,
the second metal member (D) is aluminum or an aluminum alloy,
temperatures of the first metal member (E) and the second metal member (D) at the solid-phase joining do not exceed respective melting points of the members, and
the preheating the joint surface of the first metal member (E) is performed in a state where the first metal member (E) and the second metal member (D) are held removed from each other.

## Patentansprüche

1. Verfahren zur Herstellung eines verbundenen Gegenstandes (C), der durch ein Verbinden von Verbindungsflächen eines ersten und zweiten Metallelementen (E, D) erhalten wird, wobei die Verbindungsfläche von einem der Metallelemente einen vorderen Endabschnitt einer äußeren Umfangsfläche des Metallelements ist, wobei das andere der Metallelemente ein Loch aufweist, wobei das Loch durch eine innere Umfangsfläche des anderen Metallelements bestimmt ist, wobei die innere Umfangsfläche die Verbindungsfläche des anderen Metallelements ist, wobei das Verfahren umfasst:
ein Bereitstellen (ST1) des ersten Metallelements (E);
ein Bereitstellen (ST2) des zweiten Metallelements (D); wobei das Verfahren **gekennzeichnet ist durch**
ein Vorwärmen (ST3) der Verbindungsfläche des ersten Metallelements (E) unter Verwendung eines hochfrequenten induzierten elektrischen Stroms;
ein Ausüben von Druck (ST4) auf das erste Metallelement (E) und das zweite Metallelement (D) in einer Weise, in der der vordere Endabschnitt in das Loch gedrückt wird;
ein Anlegen eines ersten elektrischen Stroms (ST5) zwischen dem ersten Metallelement (E) und dem zweiten Metallelement (D) zu einem Zeitpunkt, zu dem eine Temperatur des ersten Metallelements (E) eine vorgeschriebene Temperatur aufgrund des Vorwärmens erreicht hat; und
ein Verbinden des ersten und des zweiten Metallelements (E, D) in fester Phase durch die Anwendung von Druck und die Anwendung des ersten elektrischen Stroms,
wobei das erste Metallelement (E) ein Eisen oder ein Eisenstahlmaterial ist,
wobei das zweite Metallelement (D) ein Aluminium oder eine Aluminiumlegierung ist,
wobei die Temperaturen des ersten Metallelements (E) und des zweiten Metallelements (D) bei der Festkörperphasenverbindung die jeweiligen Schmelzpunkte der Elemente nicht überschreiten, und
wobei das Vorwärmen der Verbindungsfläche des ersten Metallelements (E) in einem Zustand durchgeführt wird, in dem das erste Metallelement (E) und das zweite Metallelement (D) voneinander entfernt gehalten werden.

## Revendications

1. Procédé de fabrication d'un article soudé (C) obtenu en soudant les surfaces de soudage d'une première et d'une seconde membrures métalliques (E, D), la surface de soudage de l'une des membrures métalliques étant une surface circonférentielle extérieure d'une portion d'extrémité de la membrure métallique, l'autre des membrures métalliques ayant un trou, le trou étant défini par une surface circonférentielle intérieure de l'autre membrure métallique, la surface circonférentielle intérieure étant la surface de soudage de l'autre membrure métallique, le procédé comprenant les étapes consistant à :
Fournir (ST1) la première membrure métallique (E) ;
Fournir (ST2) la seconde membrure métallique (D) ;
Le procédé étant **caractérisé par** les étapes suivantes :
Préchauffer (ST3) la surface de soudage de la première membrure métallique (E) à l'aide d'un courant électrique d'induction à haute fréquence ;
Appliquer une pression (ST4) sur la première membrure métallique (E) et la seconde membrure métallique (D) de manière que la portion d'extrémité soit pressée dans le trou ;
Appliquer un premier courant électrique (ST5) entre la première membrure métallique (E) et la seconde membrure métallique (D) au moment où une température de la première membrure métallique (E) a atteint une température prescrite du fait du préchauffage ; et
Souder en phase solide la première et la seconde membrures métalliques (E, D) par application d'une pression et l'application du premier courant électrique,
La première membrure métallique (E) est un matériau de fer ou d'acier,
La seconde membrure métallique (D) est l'aluminium ou un alliage d'aluminium,
Les températures de la première membrure métallique (E) et de la seconde membrure métallique (D) au niveau de la soudure en phase solide ne dépassent pas les points de fusion respectifs des membrures, et
Le préchauffage de la surface de soudage de la première membrure métallique (E) est effectuée dans un état où la première membrure métallique (E) et la seconde membrure métallique (D) sont maintenues distantes l'une de l'autre.
